# EUROPÄISCHE PATENTSCHRIFT

(11) **EP 2 225 304 B1**
(45) Veröffentlichungstag und Bekanntmachung des Hinweises auf die Patenterteilung: **29.02.2012**
(21) Anmeldenummer: 08864757.3
(22) Anmeldetag: 09.12.2008
(51) Int. Cl.: C08G 18/40, C08G 18/48

(54) **VISKOELASTISCHER POLYURETHANSCHAUMSTOFF**
VISCOELASTIC POLYURETHANE FOAM
MOUSSE DE POLYURÉTHANE VISCOÉLASTIQUE

(30) Priorität: 20.12.2007 DE 102007061883
(43) Veröffentlichungstag der Anmeldung: 08.09.2010
(73) Patentinhaber: Bayer MaterialScience AG, 51368 Leverkusen (DE)
(72) Erfinder: TRIOULEYRE, Sebastien, 51069 Köln (DE); MEYER-AHRENS, Sven, 51375 Leverkusen (DE); MOSBACH-ROSENBERGER, Alice, 51519 Odenthal (DE)
(74) Vertreter: von Kreisler Selting Werner
(86) Internationale Anmeldenummer: PCT/EP2008/010416
(87) Internationale Veröffentlichungsnummer: WO 2009/080202

(56) Entgegenhaltungen:
- EP-A- 0 934 962
- WO-A-00/73362
- WO-A-03/046041

## Beschreibung

Die vorliegende Erfindung betrifft Polyetherpolyol-Zusammensetzungen, ein Verfahren zur Herstellung viskoelastischer Polyurethanschäume unter Verwendung solcher Polyetherpolyol-Zusammensetzungen sowie entsprechend hergestellte viskoelastische Schaumstoffmaterialien und deren Verwendung.

Viskoelastische Schaumstoffe zeichnen sich durch eine langsame, graduelle Rückverformung nach einer erfolgten Kompression aus. Solche Materialien sind im Stand der Technik wohl bekannt und werden wegen ihrer Energieabsorbierenden Eigenschaften sehr geschätzt. Viskoelastische Schaumstoffmaterialien finden sich in einer Vielzahl von Anwendungsbereichen zur Polsterung (wie zum Beispiel in Kissen, Sitzbezügen, Matratzen usw.), als Schall- und/oder Vibrations-dämpfende Materialien oder auch als Aufprallschutz.

Unter den viskoelastischen Schaumstoffmaterialien besitzen solche aus Polyurethanen sicherlich die größte Bedeutung. Dies liegt zum einen darin begründet, dass sich durch die Wahl der verwendeten Polyol- beziehungsweise Isocyanatkomponenten und gegebenenfalls weiterer Hilfsstoffe die physikalischen Eigenschaften des zu erhaltenden Polyurethanschaumstoffes sehr genau einstellen lassen, zum anderen aber auch daran, dass sich durch die "in situ"-Herstellung (gegebenenfalls vor Ort) Schaumstoffmaterialien nahezu beliebiger und sehr komplexer Form und Struktur herstellen lassen.

Bei der Herstellung von Polyurethanen werden gewöhnlich zwei oder mehrere Flüssigkeitsströme miteinander vereinigt. Die Mischung dieser Flüssigkeitsströme initiiert die Polymerisation und gegebenenfalls das Aufschäumen des polymerisierenden Materials. Polymerisation und Formgebung erfolgen oft in einem Schritt, typischerweise durch Formgebung oder Sprühen der noch im flüssigen Zustand befindlichen Reaktionsmischung. Daneben werden Polyurethane auch oft in Form von Blöcken hergestellt, welche anschließend in die gewünschte Form zurechtgeschnitten werden.

Bei den oben genannten Flüssigkeitsströmen handelt es sich in der Mehrzahl der Fälle auf der einen Seite um eine polyfunktionelle organische Isocyanatkomponente (welche auch oft als "A-Komponente" bezeichnet wird) und auf der anderen Seite um polyfunktionelle Monomere oder Harze, welche Isocyanaten gegenüber eine entsprechende Reaktivität aufweisen und gegebenenfalls weitere Hilfsstoffe enthalten können. Dieses Gemisch, welches vielfach als "B-Komponente" bezeichnet wird, umfasst typischerweise zum größten Teil eine oder mehrere Polyolkomponenten.

Um nun einen Polyurethanschaumstoff bestimmter Zusammensetzung zu erhalten, werden die oben beschriebenen Flüssigkeitsströme vor ihrer Vermischung entsprechend dosiert. Ein Aufschäumen wird dabei normalerweise so erreicht, dass der B-Komponente Wasser zugesetzt wird, welches mit dem Polyisocyanat der A-Komponente unter Bildung eines Amins und unter Freisetzung von CO₂ reagiert, welches wiederum als Treibgas fungiert. Alternativ oder zusätzlich zu der Verwendung von Wasser werden oft auch flüchtige inerte organische Verbindungen oder inerte Gase verwendet.

Die Mehrzahl der konventionellen Polyurethanschaumstoffe stellen Blockcopolymere dar, welche räumlich getrennte Bereiche verschiedener Phasen mit hohen und niedrigen Glasübergangstemperaturen (T_{G}) aufweisen. Die Glasübergangstemperatur trennt dabei den unterhalb von ihr liegenden spröden energieelastischen Bereich (= Glasbereich) von dem oberhalb von ihr liegenden weichen entropieelastischen Bereich (= gummielastischer Bereich). Diese hohen und niedrigen Glasübergangstemperaturen verschiedener Phasen innerhalb des Polymers grenzen normalerweise den Temperaturbereich ein, innerhalb dessen man das besagte Material verwenden kann. Die DMA-("dynamic mechanical analysis") Spektren solcher Materialien zeichnen sich üblicherweise durch einen relativ flachen Bereich ("modulus plateau") zwischen den verschiedenen Glasübergängen aus.

Die Phase geringer Glasübergangstemperatur in diesen Materialien leitet sich üblicherweise (obwohl nicht immer) von einem "Block" geringer Glasübergangstemperatur ab, welcher vorgeformt wird und anschließend erst der Polymerisation unterworfen wird. Die Phase hoher Glasübergangstemperatur bildet sich demgegenüber normalerweise erst während der Polymerisation, bedingt durch die dann erfolgende Ausbildung der Urethaneinheiten. Der Block geringer Glasübergangstemperatur (oft auch als "Weichblock" bezeichnet) leitet sich üblicherweise von einer Flüssigkeit oder von einem oligomeren Harz geringer Schmelztemperatur ab, welche eine Vielzahl von gegenüber Isocyanateinheiten reaktiven Gruppen enthalten. Polyether- und Polyesterpolyole sind Beispiele solcher oligomeren Harze.

In konventionellen Polyurethanen ordnen sich die harten (hohe Glasübergangstemperatur) und weichen (geringe Glasübergangstemperatur) Phasen während der Polymerisation zueinander an und trennen sich anschließend spontan voneinander, um voneinander morphologisch verschiedene Phasen innerhalb des "Bulkpolymers" auszubilden. Bei solchen Materialien spricht man entsprechend auch von "phasenseparierten" Materialien.

Viskoelastische Polyurethane stellen in diesem Zusammenhang gewissermaßen einen Spezialfall dar, bei welchen nämlich die oben beschriebene Phasentrennung nur unvollständig oder überhaupt nicht auftritt.

Von einer solchen "Struktur-Viskoelastizität" bei Polyurethanschaumen mit (überwiegend) offenen Zellen zu unterscheiden ist eine solche Viskoelastizität, die auf einen pneumatischen Effekt zurückzuführen ist. In letzterem Falle befinden sich nämlich nahezu geschlossene Zellen innerhalb des Schaumstoffmaterials, also Zellen mit nur einer geringen Öffnung. Durch die geringe Größe der Öffnungen strömt die Luft nach einer Kompression nur langsam wieder ein, was eine verlangsamte Rückverformung zur Folge hat. Beispiele für solche auf einem pneumatischen Effekt beruhenden viskoelastischen Schaumstoff sind die im Handel erhältlichen Produkte Cosypur^{®} und Elastoflex^{®} der Elastogran GmbH.

Zur Synthese von Polyurethanschäumen mit Struktur-Viskoelastizität sind im Stand der Technik schon viele Verfahren beschrieben worden, deren gemeinsames Merkmal meistens die Verwendung einer speziellen Polyetherpolyol-Zusammensetzung neben einer mehr oder weniger frei wählbaren Isocyanatkomponente ist.

Solche Polyetherpolyole sind dabei üblicherweise das Produkt der Polymerisation von Epoxiden, wie Ethylenoxid (EO), Propylenoxid (PO), Butylenoxid, Styroloxid oder Epichlorhydrin mit sich selbst oder durch Anlagerung dieser Epoxide, gegebenenfalls im Gemisch oder nach einander, an Startkomponenten mit reaktionsfähigen Wasserstoffatomen, wie Wasser, Alkohole, Ammoniak oder Aminen. Derartige "Starter-Moleküle" weisen dabei in der Regel eine Funktionalität von 1 bis 6 auf. In Abhängigkeit von der Verfahrensführung kann es sich bei diesen Polyetherpolyolen um Homopolymere, Blockcopolymere, "random"-Copolymere, "capped"-Polymere oder um Polymere handeln, welche mit einer Mischung verschiedener Epoxide ge-"tipped" sind. Um solche Polyetherpolyole genauer zu spezifizieren, haben sich im Stand der Technik verschiedene Kenngrößen herauskristallisiert:
i.) Die Hydroxyl-Funktionalität, welche vom Starter-Molekül abhängt, auf dem aufbauend das Polyetherpolyol synthetisiert wird;
ii.) die Hydroxyl- oder OH-Zahl, welche ein Maß für den Gehalt an Hydroxylgruppen ist, und in mg KOH/g angegeben wird;
iii.) bei der Verwendung von Epoxiden, deren Ringöffnung die Ausbildung unterschiedlicher (d. h. primärer oder sekundärer) Hydroxylgruppen zur Folge hat, erfolgt zum einen die Angabe des Anteils der jeweiligen Epoxide im Polyetherpolyol, zum anderen aber auch die Angabe des Anteils primärer beziehungsweise sekundärer Hydroxylgruppen bezogen auf die Gesamtzahl der im Polyetherpolyol vorhandenen Hydroxylgruppen;
iv.) die Molekularmasse (Mₙ oder M_{w}), welches ein Maß für die Länge der Polyoxyalkylen-Ketten der Polyetherpolyole ist.

Die oben genannten Größen können dabei über die folgende Gleichung in Bezug zueinander gesetzt werden: 56.100 = OH-Zahl · (M_{w}/Hydroxyl-Funktionalität).

WO 01/32736 A1 beschreibt eine Polyetherpolyol-Zusammensetzung zur Herstellung viskoelastischer Polyurethanschäume, welche die folgenden Bestandteile umfasst:
b1) ein Polyoxyethylen-Polyoxypropylen-Polyol, mit einer Durchschnitts-Hydroxylfunktionalität in einem Bereich von 2 bis 6, worin das EO ge-"tipped" und/oder zufällig in der Polymerkette verteilt ist ("random"), und der Gesamt-EO-Gehalt mindestens 50 Gew.-% beträgt;
b2) ein Polyoxyethylen-Polyoxypropylen-Polyol, mit einer Durchschnitts-Hydroxylfunktionalität in einem Bereich von 2 bis 6, worin das EO ge-"tipped" und/oder zufällig in der Polymerkette verteilt ist ("random"), und der Gesamt-EO-Gehalt in einem Bereich von 20 bis 50 Gew.-% liegt und der Anteil primärer Hydroxylgruppen mindestens 50% beträgt, bezogen auf die Gesamtzahl primärer und sekundärer Hydroxylgruppen;
b3) ein Polyoxyethylen-Polyoxypropylen-Polyol, mit einer Durchschnitts-Hydroxylfunktionalität in einem Bereich von 2 bis 6, worin der EO-Gehalt in einem Bereich von 10 bis 20 Gew.-% liegt und der Anteil primärer Hydroxylgruppen mindestens 50% beträgt, bezogen auf die Gesamtzahl primärer und sekundärer Hydroxylgruppen;
b4) ein Polyalkylenglykol mit einem durchschnittlichen Molekularmasse in einem Bereich von 100 bis 1200;
die Polyole b1, b2, b3 und b4 sind dabei, bezogen auf die Gesamtmasse aller Polyole b1, b2, b3 und b4, in den folgenen Mengen enthalten: b1: 30-85 Gew.-%, b2: 5-65 Gew.-%, b3: 5-40 Gew.-%, b4: 0-50 Gew.-%.

Die Polyetherpolyol-Zusammensetzung in WO 02/088211 A1 basiert im Wesentlichen auf der in WO 01/32736 A1 Beschriebenen, umfasst jedoch als einen weiteren Bestandteil ein Polyoxyalkylen-Monool mit einer Molekularmasse von mindestens 120.

Auch WO 02/077056 A1, WO 01/25305 A1 und US 5,420,170 beschreiben verschiedene Polyetherpolyol-Zusammensetzungen zur Herstellung viskoelastischer Polyurethanschäume.

Die kaum beziehungsweise überhaupt nicht vorhandene Phasentrennung bei (struktur-) viskoelastischen Polyurethanschäumen (siehe oben) äußert sich normalerweise in einem einzigen weit ausgedehnten Glasübergangsbereich, dessen Temperatur typischerweise in einem Bereich von ca. 0 bis ca. 50 °C liegt. Dies hat in der Regel eine große Abhängigkeit der physikalischen Eigenschaften des Polyurethanschaumes von der Umgebungstemperatur zur Folge.

In Abhängigkeit vom jeweiligen Einsatzbereich kann eine solche große Temperaturabhängigkeit erwünscht oder unerwünscht sein.

So beschreibt US 6,653,363 B1 viskoelastische Polyurethanschäume, deren Elastizität eine hohe Temperaturabhängigkeit aufweist. Zum Einsatz kommen solche Schäume zum Beispiel in Form von Matratzen, deren Elastizität an den belasteten Stellen aufgrund der Körperwärme zunimmt und damit ein angenehmes Gleichgewicht zwischen Härte und Weichheit aufweisen.

Genauso bevorzugt kann es jedoch sein, wenn die physikalischen Eigenschaften der Polyurethanschäume nur eine geringe Temperaturabhängigkeit aufweisen. So fällt es zum Beispiel sehr leicht, sich vorzustellen, dass entsprechende Schäume in Sitzen von Fahrzeugen Anwendung finden sollten, da hier die Umgebungstemperatur der Sitze (anders als beispielsweise bei Matratzen) doch relativ großen Schwankungen unterworfen sein kann.

Entsprechend beschreibt US 6,136,879 A weiche Polyurethanschäume, deren Elastizität nur eine geringe Temperaturabhängigkeit aufweist. Erreicht wird dieses Ziel im Wesentlichen durch die Anwesenheit eines speziellen Polyoxyalkylenmonool, welches von Alkylphenolen durch Polymerisation mit Propylenoxid und/oder Ethylenoxid erhalten wird. In diesem Zusammenhang wird jedoch nichts über die Zugänglichkeit von viskoelastischen Polyurethanschäumen mit nur geringer Temperaturabhängigkeit der physikalischen Eigenschaften ausgesagt.

EP 0 934962 A1 beschreibt Polyurethanschäume deren Rückverformung-Elastizität eine geringe Temperaturabhängigkeit aufweist.

Es ist daher die Aufgabe der vorliegenden Erfindung, einen viskoelastischen Polyurethanschaum bereitzustellen, dessen physikalische Eigenschaften, insbesondere die Elastizität, eine geringe Temperaturabhängigkeit aufweisen.

In einer ersten Ausführungsform wird die der vorliegenden Erfindung zugrundeliegende Aufgabe gelöst durch eine Polyetherpolyol-Zusammensetzung, zum Einsatz in einer Polyurethanzusammensetzung welche die folgenden Polyetherpolyole umfasst:
(a) ein Polyetherpolyol mit einer Hydroxyl-Funktionalität von 2, einer OH-Zahl in einem Bereich von 50 bis 65 mg KOH/g und einem Anteil primärer Hydroxylgruppen in einem Bereich von 40 bis 80% bezogen auf die Gesamtzahl primärer und sekundärer Hydroxylgruppen, welches einen PO-Gehalt in einer Menge von 45 bis 55 Gew.-% und einen EO-Gehalt in einer Menge von 40 bis 55 Gew.-% aufweist;
(b) eine Dispersion eines Polymers in einem Polyetherpolyol, wobei die OH-Zahl der Dispersion in einem Bereich von 10 bis 30 mg KOH/g liegt und wobei das Polyetherpolyol eine Hydroxyl-Funktionalität von 3, einen Anteil primärer Hydroxylgruppen in einem Bereich von 70 bis 90% bezogen auf die Gesamtzahl primärer und sekundärer Hydroxylgruppen, einen PO-Gehalt in einer Menge von 70 bis 90 Gew.-% und einen EO-Gehalt in einer Menge von 10 bis 30 Gew.-% aufweist;
(c) ein Polyetherpolyol mit einer Hydroxyl-Funktionalität von 3, einer OH-Zahl in einem Bereich von 220 bis 290 mg KOH/g und einem Anteil primärer Hydroxylgruppen in einem Bereich von mindestens 90% bezogen auf die Gesamtzahl primärer und sekundärer Hydroxylgruppen, welches einen PO-Gehalt in einer Menge von bis zu 2 Gew.-% und einen EO-Gehalt in einer Menge von mindestens 75 Gew.-% aufweist;
(d) ein Polyetherpolyol mit einer Hydroxyl-Funktionalität von 2, einer OH-Zahl in einem Bereich von 50 bis 70 mg KOH/g und einem Anteil primärer Hydroxylgruppen in einem Bereich von 0 bis 3% bezogen auf die Gesamtzahl primärer und sekundärer Hydroxylgruppen, welches einen PO-Gehalt in einer Menge von mindestens 95 Gew.-% und einen EO-Gehalt in einer Menge von bis zu 3 Gew.-% aufweist.

Die erfindungsgemäßen Polyetherpolyole werden durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine hergestellt.
Besonders bevorzugt unter den oben genannten Epoxiden sind Ethylenoxid und Propylenoxid.

Die oben für EO und PO angegebenen Gehalte beziehen sich dabei auf die (Gesamt-)Masse der bei der Herstellung der Polyetherpolyole eingebauten Epoxide. Außer Betracht bleibt dabei die Masse der eingesetzten Starter-Moleküle.

Werden mehrere Epoxide zur Synthese der Polyetherpolyole verwendet, so können letztere jede gewünschte Anordnung der Oxyalkyleneinheiten aufweisen. So kann es sich entsprechend um Homopolymere (bei der Verwendung nur eines Epoxids), Copolymere, "random"-Copolymere, "capped"-Polymere oder um Polymere handeln, die mit einem Gemisch verschiedener Epoxide ge-"tipped" sind, um einen gewünschten Gehalt an primären Hydroxylgruppen zu erzielen.

Bevorzugt liegen die Massenanteile der Komponenten (a) bis (d) (gegebenenfalls unabhängig voneinander) in den folgenden Mengen: (a) 40 bis 60 Gew.-%; (b) 10 bis 30 Gew.-%; (c) 5 bis 20 Gew.-% und (d) 10 bis 30 Gew.-%. Die Angaben in Gew.-% beziehen sich dabei jeweils auf die Gesamtmasse der Polyetherpolyol-Zusammensetzung. Diese Gewichtsanteile sind dabei insofern bevorzugt, als sie eine besonders geringe Temperaturabhängigkeit der physikalischen Eigenschaften im erfindungsgemäßen Polyurethanschaum zur Folge haben.

Komponente (b) der erfindungsgemäßen Polyetherpolyol-Zusammensetzung stellt eine Dispersion eines Polymers dar.

Solche Dispersionen sind bekannt als Polymer-modifizierte Polyole und umfassen Polymer-modifizierte Polyetherpolyole, bevorzugt Graft-Polyetherpolyole, insbesondere solche auf Styrol- und/oder Acrylnitril-Basis, welche vorteilhafterweise durch in-situ Polymerisation von Styrol, Acrylnitril oder bevorzugt von Mischungen von Styrol und Acrylnitril (beispielsweise in einem Gewichtsverhältnis von 90: 10 zu 10:90, insbesondere von 70:30 zu 30:70) in den obengenannten Polyetherpolyolen erhalten werden (nach Verfahren, wie sie in den folgenden Patentschriften beschrieben sind: DE 11 11 394, DE 12 22 669, DE 11 52 536, DE 11 52 537, US 3,304,273, US 3,383,351, US 3,523,093, GB 1040452, GB 987618).

Ebenfalls versteht man unter oben genannten Dispersionen solche, welche durch Dispersion von beispielsweise Polyharnstoffen, Polyhydraziden, Polyurethanen mit tertiären Amino-Gruppen und/oder Melamin in den Polyetherpolyolen erhalten werden (beispielsweise beschrieben in EP 0 011 752, US 4,304,708, US 4,374,209, DE 32 31 497). In den zuletzt genannten Fällen enthalten die Dispersionen gewöhnlicherweise 1 bis 50 Gew.-% an dispergierter Phase, bevorzugt 35 bis 50 Gew.-%.

Der Anteil primärer Hydroxylgruppen in der Komponente (a) liegt bevorzugt in einer Menge von 50 bis 70 % bezogen auf die Gesamtzahl primärer und sekundärer Hydroxylgruppen.

Mögliche Starterverbindungen sind zum Beispiel Dicarbonsäuren, wie Bernsteinsäure, Adipinsäure, Phthalsäure und Terephthalsäure.

Als Starterverbindungen können beispielsweise auch Ammoniak oder aliphatische und/oder aromatische Amine, die gegebenenfalls substituiert sein können, wie zum Beispiel N-monoalkyl-, N,N-dialkyl- und/oder N,N'-dialkyl-substituierte Diamine verwendet werden. Sie weisen mindestens eine primäre oder sekundäre Aminogruppe auf, wie beispielsweise 1,2-Diaminoethan, Oligomere des 1,2-Diaminoethans (beispielsweise Diethylentriamin, Triethylentetramin oder Pentaethylenhexamin), 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder aromatische Amine, die durch säurekatalysierte Kondensation von Anilin mit Formaldehyd erhalten werden. Weitere geeignete Startermoleküle sind Alkanolamine, wie beispielsweise Ethanolamin, N-Methyl-und N-Ethylethanolamin, Dialkanolamine, wie beispielsweise Diethanolamin, N-Methyl- und N-Ethyldiethanolamin und Trialkanolamine, wie beispielsweise Triethanolamin.

Weitere geeignete Starterverbindungen sind solche mit zwei oder mehr Hydroxylgruppen, wie beispielsweise Wasser, 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerin, Trimethylolpropan, Pentaerythrit, Sorbit und Saccharose, Rizinusöl, modifiziertes Sojaöl. Die Starterverbindungen können allein oder als Gemische verwendet werden.

Erfindungsgemäß in den Polyolkomponenten (a) bis (d) einsetzbare Polyetherpolyole weisen Molmassen in einem Bereich von 150 bis 12500 g/mol, vorzugsweise in einem Bereich von 500 to 6200 g/mol auf. Ganz besonders bevorzugt wird bei den Komponenten (a) und (d) ein 1,2-Diol als Startermolekül, insbesondere Propylenglykol, verwendet. Bei den Komponenten (b) und (c) werden bevorzugt Triole als Startermoleküle verwendet - im Falle von Komponente (b) bevorzugt Glyzerin, im Falle von Komponente (c) bevorzugt Trimethylolpropan.

Ganz besonders bevorzugte Beispiele für die oben genannten Komponenten (a) bis (d) sind die folgenden (teilweise kommerziell erhältlichen) Produkte:
Komponente (a): Bayfit^{®} VP PU 10WF04 Zusatzmittel VP PU 49WB50;
Komponente (b): Hyperlite^{®} Polyol E-852, Hyperlite^{®} Polyol 1650,;
   Bei der in Komponente (b) enthaltenden Polyetherpolyol-Komponente kann es sich zum Beispiel um Arcol^{®} E-648-X handeln;
Komponente (c): Desmophen^{®} VP PU 14791592, Desmophen^{®} VP PU 1657;
Komponente (d): Desmophen^{®} 3600 Z, Desmophen^{®} 2060 BD und In einer zweiten Ausführungsform wird die der vorliegenden Erfindung zugrundeliegende Aufgabe gelöst durch ein Verfahren zur Herstellung eines viskoelastischen Schaumes, welches dadurch gekennzeichnet ist, dass man
   A) eine Polyisocyanatkomponente
   B) eine erfindungsgemäße Polyetherpolyol-Zusammensetzung,
   C) und gegebenenfalls Wasser, einen oder mehrere Katalysatoren unter Zusatz gegebenenfalls weiterer Hilfsstoffe, Füllstoffe und/oder Treibmittel zur Reaktion bringt.

Unter dem Begriff "Wasser" werden erfindungsgemäß in diesem Zusammenhang auch wasserfreisetzende Komplexe, Addukte und Einschlussverbindungen verstanden. Bevorzugt ist in diesem Zusammenhang freies Wasser, welches bezogen auf die Polyetherpolyol-Komponente B in einer Menge in einem Bereich von 0 bis 10 Gew.-%, bevorzug in einer Menge in einem Bereich von 0,5 bis 3 Gew.-% enthalten sein kann.
Als gegebenenfalls mitzuverwendende Treibmittel finden die üblicherweise für das Aufschäumen von Polyurethanschaumstoffen eingesetzten Treibmittel Verwendung. Beispiele für Treibmittel sind Alkane wie n-Pentan, iso-Pentan, Gemische aus iso- und n-Pentan, Cyclopentan, Cyclohexan, Mischungen aus Butanisomeren und den genannten Alkanen, halogenierte Verbindungen wie zum Beispiel Dichlormethan, Dichlormonofluormethan, Difluormethan, Trifluormethan, Difluorethan, 1,1,1,2-Tetrafluroethan, Tetrafluorethan (R 134 und R 134a), 1,1,1,3,3,3-Hexafluorpropan (R 356), 1,1,1,3,3-Pentafluorpropan (R 245fa), Chlordifluorethan, 1,1-Dichlor-2,2,2-Trifluorethan, 2,2-Dichlor-2-fluorethan, Heptafluorpropan und Schwefelhexafluorid und Kohlendioxid.

Bevorzugt werden Kohlendioxid, Cyclopentan, n-Pentan und iso-Pentan einzeln oder als Gemisch, gegebenenfalls in der Abmischung mit Wasser, eingesetzt. Weitere geeignete Treibmittel sind Carbonsäuren wie Ameisensäure, Essigsäure, Oxalsäure und chemische Treibmittel, die im Verlauf des Schäumprozesses Gase freisetzen, wie zum Beispiel Azoverbindungen. Bevorzugt werden diese Treibmittel in Kombination mit Wasser eingesetzt.

Als gegebenenfalls mitzuverwendende Hilfs- und Zusatzstoffe können Paraffine, Paraffinöl, Fettalkohole oder Dimethylpolysiloxane sowie Pigmente oder Farbstoffe, ferner Stabilisatoren gegen Alterungs- und Witterungseinflüsse, Weichmacher (wie zum Beispiel Dioctylphthalat, Distearylphthalat, Diisodecylphthalat, Dioctyladipat, Trikresylphosphat, Triphenylphosphat und andere) und fungistatisch und bakteriostatisch wirkende Substanzen, sowie Füllstoffe wie Bariumsulfat, Kieselgur, Ruß, Schlämmkreide, Glasfasern, LC-Fasern, Glasflakes, Glaskugeln, Aramid- oder Kohlefasern mitverwendet werden. Weitere Beispiele für mögliche Schaumstabilisatoren, flammhemmende Substanzen, oberflächenaktive Substanzen und Füllstoffe finden sich in US 2002/0165290 A1, und hier insbesondere in den Abschnitten [0033], [0034] und [0058]-[0062].

Die soeben genannten Hilfs- beziehungsweise Zusatzstoffe können sowohl einer als auch mehreren Komponenten zugemischt und auch in ein gegebenenfalls zu verwendendes Formwerkzeug eingelegt werden.

Zur Herstellung der erfindungsgemäßen Schaumstoffe werden gegebenenfalls Katalysatoren verwendet, die die Reaktion zwischen der Polyolkomponente B und der Isocyanatkomponente A beschleunigen. Beispiele für geeignete Katalysatoren sind organische Zinnverbindungen wie Zinn(II)salze organischer Carbonsäuren, zum Beispiel Zinn(II)acetat, Zinn(II)octoat, Zinn(II)ethylhexoat und Zinn(II)laurat und die Dialkylzinn(IV)salze, beispielsweise Dibutlyzinndiacetat, Dibutylzinndilaurat, Dibutlyzinnmaleat und Dioctylzinndiacetat. Weitere Beispiele für geeigenete Katalysatoren sind Amidine, wie zum Beispiel 2,3-Dimethyl-2,4,5,6-tetrahydropyrimidine und Amine wie Triethylamin, Tributylamin, Dimethylcyclohexylamin, Dimethylbenzylamin, Pentamethyldiethylentriamin, N,N,N',N'-Tetramethylbutandiamin und -ethandiamin, N-Methylmorpholin, N-Ethylmorpholin, N-Cyclohexylmorpholin, N,N,N',N'-Tetramethyl-1,6-hexandiamin, Pentamethyldiethylentriamin, Tetramethylguanidin, Tetramethyldiaminoethylether, Bis(dimethylaminopropyl)harnstoff, Dimethylpiperazin, 1,2-Dimethylimidazol, 1-Azabicyclo[3,3,0]octan und vorzugsweise 1,4-Diazabicyclo[2,2,2]octan, Bis(dimethylaminoethyl)ether und Tris(dialkylaminoalkyl)-s-hexahydrotriazin. Bevorzugt enthält die Katalysatorkomponente mindestens ein aliphatisches Amin.

Auch können Aminoalkohole als Katalysatoren verwendet werden. Beispiele sind Triethanolamin, Triisopropanolamin, N-Methyl- und N-Ethyldiethanolamin, und Dimethylethanolamin und Diethanolamine. Bevorzugt ist N-(Dimethylaminoethyl)-N-Methylethanolamin.

Es kann auch eine Kombination mehrerer Katalysatoren verwendet werden.

Bevorzugt wählt man bei dem erfindungsgemäßen Verfahren die Menge der Polyisocyanat-Komponente so aus, dass die Isocyanat-Kennzahl in einem Bereich von 70 bis 110, besonders bevorzugt in einem Bereich von 80 bis 100, liegt, da nur innerhalb dieser engen Bereiche eine sehr geringe Temperaturabhängigkeit des erhaltenen Schaumstoffes erreicht wird. Eingesetzt werden können in dem erfindungsgemäßen Verfahren neben (d. h. gegebenenfalls im Gemisch mit) "einfachen" Polyisocyanatkomponenten auch solche, die durch eine sogenannte Präpolymerisation einfacher Polyisocyanatkomponenten und organischer Verbindungen mit mindestens einer Hydroxylgruppe erhalten wurden. Beispielhaft genannt seien ein bis vier Hydroxylgruppen aufweisende Polyol- oder Polyester mit Molekularmassen von 60 bis 6500. Ganz bevorzugt setzt man dabei solche Präpolymere ein, die durch Präpolymerisation mit der erfindungsgemäßen Polyetherpolyol-Zusammensetzung erhalten wurden.

Als Polyisocyanatkomponente A werden im erfindungemäßen Verfahren organische Di- oder Polyisocyanate verwendet. Als Di- oder Polyisocyanate kommen aliphatische, cycloaliphatische, araliphatische, aromatische und heterocyclische Polyisocyanate in Frage, wie sie in Justus Liebigs Annalen der Chemie 1949, 562, S. 75-136 beschrieben werden, beispielsweise solche der Formel

Q(NCO)ₙ

in der
n eine ganze Zahl von 2 bis 4, vorzugsweise 2, und
Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 8 bis 15, vorzugsweise 8 bis 13 C-Atomen bedeuten.

Bevorzugt sind Polyisocyanate, wie sie in der DE-OS 28 32 253 beschrieben werden. Besonders bevorzugt eingesetzt werden in der Regel technisch leicht zugänglichen Polyisocyanate, zum Beispiel das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("MDI") und Carbodiimidgruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat beziehungsweise vom 4,4'- und/oder 2,4'-Diphenylmethandiisocyanat ableiten.

Insbesondere als vorteilhaft hat es sich erwiesen, MDI einzusetzen, welches einen Monomergehalt in einer Menge von 75 bis 85 Gew.-% aufweist. Der Anteil des MDI-2,4'-Isomers am gesamten Monomeranteil im MDI liegt dabei bevorzugt in einer Menge von 8 bis 35 Gew.-%, besonders bevorzugt in einer Menge von 15 bis 25 Gew.-%.

Insbesondere MDI und die soeben beschriebenen Gehaltsangaben an Monomeren beziehungsweise Monomer-Isomeren haben sich dabei im Hinblick auf eine geringe Temperaturabhängig der physikalischen Eigenschaften als besonders vorteilhaft erwiesen.

Die erfindungsgemäßen Polyurethanschaumstoffe sind der oben schon beschriebenen Klasse solcher Schaumstoffe zuzuordnen, deren Viskoelastizität auf den besonderen strukturellen Aufbau der Polyurethan-Komponenten basiert. Es handelt sich also nicht um eine pneumatische-Viskoelastizität. In einer dritten Ausführungsform wird die der Erfindung zugrundeliegende Aufgabenstellung gelöst durch einen viskoelastischen Schaum, der nach dem oben beschriebenen Verfahren erhältlich ist. Beliebig geformte Körper aus diesem viskoelastischen Schaum können gewissermaßen in situ, zum Beispiel durch Reaktionsspritzguss, oder durch Ausschneiden oder Ausstanzen aus entsprechend hergestellten Polyurethanschaumblöcken hergestellt werden.

In einer vierten Ausführungsform wird die der Erfindung zugrundeliegende Aufgabe gelöst durch die Verwendung eines aus dem erfindungsgemäßen viskoelastischen Schaumstoff bestehenden Körpers in Matratzen, Kissen, Sitzbezügen, Schuhsohlen, Ohrenstöpseln, Schutzkleidung, Schutzausrüstung oder Schallisolierungen.

### Ausführungsbeispiele:

Die Bayfit^{®}, Desmophen^{®} und Hyperlite^{®} Polyole werden, ebenso wie die Desmodur^{®} Isocyanate, von der Bayer Materialscience AG vertrieben; das Niax Silicone^{®} L-6164 wurde von der Momentive Performance Materials Inc. bezogen und die Addocat^{®} Katalysatoren von der Rhein Chemie Rhemian GmbH.

In einer herkömmlichen Blockschaummaschine wurde aus der folgenden Polyetherpolyol-Zusammensetzung

| | |
|---|---|
| Bayfit^{®} VP PU 10WF04 | 46,6 Gew.-Teile |
| Hyperlite^{®} Polyol 1650 | 20,0 Gew.-Teile |
| Desmophen^{®} VP PU 1657 | 10,0 Gew.-Teile |
| Desmophen^{®} 3600 Z | 23,4 Gew.-Teile |

unter Zusatz von 1,45 Gew.-Teilen Wasser,
unter Zusatz der folgenden Hilfsstoffe

| | |
|---|---|
| Niax SiliconeStabilisator L-6164 | 2,00 Gew.-Teile |
| Katalysator Addocat^{®} 108 | 0,25 Gew.-Teile |
| Katalysator Addocat^{®} 105 | 0,70 Gew.-Teile |
| und unter Verwendung von | |
| Desmodur VP PU 10WB32 | 21,2 Gew.-Teile |

als Polyisocyanat-Komponente ein erfindungsgemäßer PolyurethanSchaumstoff hergestellt, der die folgenden physikalischen Eigenschaften aufwies:

| | |
|---|---|
| Blockhöhe: | 22 cm |
| Bodenverdichtung: | 10 /mm |
| Luftdurchlässigkeit (intern; nach Aufdrücken): | 350 mmWs |
| Rohdichte (n. DIN EN ISO 3386-1-98): | 70,8 kgm⁻³ |
| Zugfestigkeit (n. DIN EN ISO 1798): | 36 kPa |
| Bruchdehnung (n. DIN EN ISO 1798): | 125% |
| Stauchhärte 40% (1. Belastung): | 2,25 kPa |
| Stauchhärte 40% (4. Belastung): | 2,06 kPa |
| Stauchhärte 40% (37 °C, 1. Belastung): | 2,34 kPa |
| Stauchhärte 40% (37 °C, 4. Belastung): | 2,15 kPa |
| Wet Compression Set (n. DIN EN ISO 1856-96): | |
| 0-Wert: | 1,1% |
| 22 h; 40 °C; 95% LF: | 0,8% |

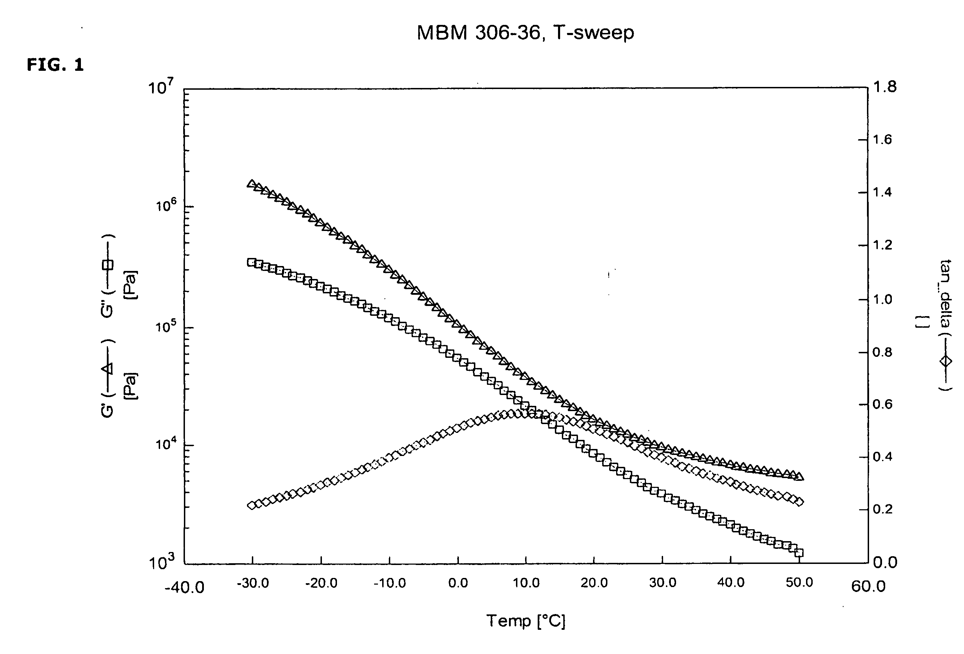

Die geringe Temperaturabhängigkeit des so erhaltenen Schaumstoffmaterials folgte aus der Analyse des zugehörigen DMA-Spektrums (Fig. 1).

Wie aus Fig. 1 ersichtlich, ist bei einer Auftragung von tan δ gegen die Temperatur (in °C) das beobachtete Maximum sehr breit ausgebildet und erstreckt sich über einen sehr breiten Temperaturbereich.

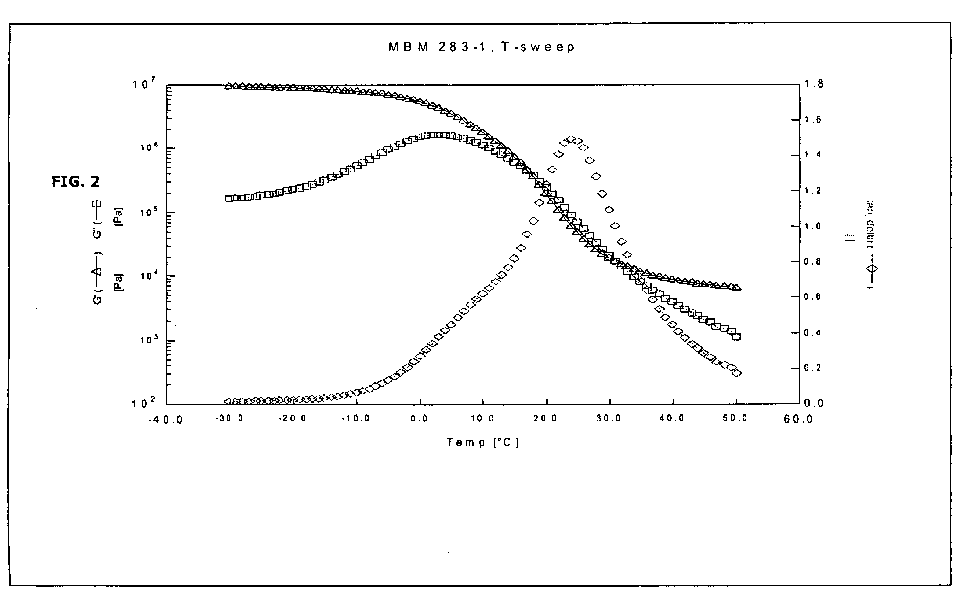

Demgegenüber zeigt Fig. 2 ein zu einem Vergleichsbeispiel gehörendes Diagramm, welches mit einer Polyol-Mischung hergestellt wurde, die ein mittleres Mw von ungefähr 700 g/mol aufwies. Das bei tan δ beobachtbare Maximum ist nun wesentlich schärfer ausgebildet und erstreckt sich über einen wesentlich engeren Temperaturbereich als im erfindungsgemäßen Beispiel.

## Patentansprüche

1. Polyetherpolyol-Zusammensetzung für die Herstellung von PolyurethanSchäumen, umfassend:
(a) ein Polyetherpolyol mit einer Hydroxyl-Funktionalität von 2, einer OH-Zahl in einem Bereich von 50 bis 65 mg KOH/g und einem Anteil primärer Hydroxylgruppen in einem Bereich von 40 bis 80% bezogen auf die Gesamtzahl primärer und sekundärer Hydroxylgruppen, welches einen PO-Gehalt in einer Menge von 45 bis 55 Gew.-% und einen EO-Gehalt in einer Menge von 40 bis 55 Gew.-% aufweist;
(b) eine Dispersion eines Polymers in einem Polyetherpolyol, wobei die OH-Zahl der Dispersion in einem Bereich von 10 bis 30 mg KOH/g liegt und wobei das Polyetherpolyol eine Hydroxyl-Funktionalität von 3, einen Anteil primärer Hydroxylgruppen in einem Bereich von von 70 bis 90% bezogen auf die Gesamtzahl primärer und sekundärer Hydroxylgruppen, einen PO-Gehalt in einer Menge von 70 bis 90 Gew.-% und einen EO-Gehalt in einer Menge von 10 bis 30 Gew.-% aufweist;
(c) ein Polyetherpolyol mit einer Hydroxyl-Funktionalität von 3, einer OH-Zahl in einem Bereich von 220 bis 290 mg KOH/g und einem Anteil primärer Hydroxylgruppen in einem Bereich von mindestens 90% bezogen auf die Gesamtzahl primärer und sekundärer Hydroxylgruppen, welches einen PO-Gehalt in einer Menge von bis zu 2 Gew.-% und einen EO-Gehalt in einer Menge von mindestens 75 Gew.-% aufweist;
(d) ein Polyetherpolyol mit einer Hydroxyl-Funktionalität von 2, einer OH-Zahl in einem Bereich von 50 bis 70 mg KOH/g und einem Anteil primärer Hydroxylgruppen in einem Bereich von 0 bis 3% bezogen auf die Gesamtzahl primärer und sekundärer Hydroxylgruppen, welches einen PO-Gehalt in einer Menge von mindestens 95 Gew.-% und einen EO-Gehalt in einer Menge von bis zu 3 Gew.-% aufweist.

2. Zusammensetzung nach Anspruch 1, **dadurch gekennzeichnet, dass** der Anteil der Komponente (a) in der Polyetherpolyol-Zusammensetzung in einer Menge von 40 bis 60 Gew.-% liegt.

3. Zusammensetzung nach einem der Ansprüche 1 oder 2, **dadurch gekennzeichnet, dass** der Anteil der Komponente (b) in der Polyetherpolyol-Zusammensetzung in einer Menge von 10 bis 30 Gew.-% liegt.

4. Zusammensetzung nach einem der Ansprüche 1 bis 3, **dadurch gekennzeichnet, dass** der Anteil der Komponente (c) in der Polyetherpolyol-Zusammensetzung in einer Menge von 5 bis 20 Gew.-% liegt.

5. Zusammensetzung nach einem der Ansprüche 1 bis 4, **dadurch gekennzeichnet, dass** der Anteil der Komponente (d) in der Polyetherpolyol-Zusammensetzung in einer Menge von 10 bis 30 Gew.-% liegt.

6. Zusammensetzung nach einem der Ansprüche 1 bis 5, **dadurch gekennzeichnet, dass** das dispergierte Polymer in Komponente (b) ein Styrol-Acrylnitril-Polymer ist.

7. Zusammensetzung nach Anspruch 6, **dadurch gekennzeichnet, dass** der Anteil von Acrylnitril in dem Styrol-Acrylnitril-Polymer in einer Menge von 30 bis 40 Gew.-% liegt.

8. Zusammensetzung nach einem der Ansprüche 6 oder 7, **dadurch gekennzeichnet, dass** der Anteil des Polyetherpolyols in der Dispersion in einer Menge von 50 bis 65 Gew.-% liegt.

9. Zusammensetzung nach einem der Ansprüche 1 bis 8, **dadurch gekennzeichnet, dass** der Anteil primärer Hydroxylgruppen in der Komponente (a) in einer Menge von 50 bis 70% bezogen auf die Gesamtzahl primärer und sekundärer Hydroxylgruppen liegt.

10. Zusammensetzung nach einem der Ansprüche 1 bis 9, **dadurch gekennzeichnet, dass** sich das Polyetherpolyol der Komponente (a) von Propylenglykol als Startmolekül ableitet.

11. Zusammensetzung nach einem der Ansprüche 1 bis 10, **dadurch gekennzeichnet, dass** sich das Polyetherpolyol der Komponente (b) von Glyzerin als Startmolekül ableitet.

12. Zusammensetzung nach einem der Ansprüche 1 bis 11, **dadurch gekennzeichnet, dass** sich das Polyetherpolyol der Komponente (c) von Trimethylolpropan als Startmolekül ableitet.

13. Zusammensetzung nach einem der Ansprüche 1 bis 12, **dadurch gekennzeichnet, dass** sich das Polyetherpolyol der Komponente (d) von Propylenglykol als Startmolekül ableitet.

14. Verfahren zur Herstellung eines viskoelastischen Schaumes, **dadurch gekennzeichnet, dass** man
A) eine Polyisocyanatkomponente
B) eine Polyetherpolyol-Zusammensetzung nach einem der Ansprüche 1 bis 13,
C) gegebenenfalls Wasser, einen oder mehrere Katalysatoren
unter Zusatz gegebenenfalls weiterer Hilfsstoffe, Füllstoffe und/oder Treibmittel zur Reaktion bringt.

15. Verfahren nach Anspruch 14, **dadurch gekennzeichnet, dass** man die Menge der Polyisocyanatkomponente so auswählt, dass die Isocyanat-Kennzahl in einem Bereich von 70 bis 110, bevorzug in einem Bereich von 80 bis 100, liegt.

16. Verfahren nach einem der Ansprüche 14 oder 15, **dadurch gekennzeichnet, dass** man eine durch eine Präpolymerisation erhalte Polyisocyanatkomponente einsetzt.

17. Verfahren nach Anspruch 16, **dadurch gekennzeichnet, dass** man eine Polyetherpolyol-Zusammensetzung nach einem der Ansprüche 1 bis 13 bei der Präpolymerisation einsetzt.

18. Verfahren nach einem der Ansprüche 14 bis 17, **dadurch gekennzeichnet, dass** man als Polyisocyanatkomponente MDI mit einem Monomergehalt in einer Menge von 75 bis 85 Gew.-% einsetzt.

19. Verfahren nach Anspruch 18, **dadurch gekennzeichnet, dass** man eine Polyisocyanatkomponente einsetzt, deren Anteil an MDI-2,4'-Isomer am Monomeranteil in einer Menge von 8 bis 35 Gew.-%, bevorzugt in einer Menge von 15 bis 25 Gew.-%, liegt.

20. Viskoelastischer Schaum erhältlich nach einem der Ansprüche 14 bis 19.

21. Geformter Körper, umfassend den viskoelastischen Schaum nach Anspruch 20.

22. Slabstock viskoelastischer Schaumstoff nach Anspruch 20.

23. Verwendung eines geformten Körpers nach Anspruch 21 in Matratzen, Kissen, Sitzbezügen, Schuhsolen, Ohrenstöpseln, Schutzkleidung, Schutzausrüstung oder Schallisolierungen

24. Verwendung von (geschnittenem) Slabstock Schaum nach Anspruch 22 in Matratzen, Kissen, Sitzbezügen, Schuhsolen, Ohrenstöpseln, Schutzkleidung, Schutzausrüstung oder Schallisolierungen

## Claims

1. Polyether polyol composition for the production of polyurethane foams, comprising:
(a) a polyether polyol having a hydroxyl functionality of 2, an OH number in a range from 50 to 65 mg of KOH/g and a proportion of primary hydroxyl groups within a range of from 40 to 80%, based on the total number of primary and secondary hydroxyl groups, which has a PO content of from 45 to 55% by weight and an EO content of from 40 to 55% by weight;
(b) a dispersion of a polymer in a polyether polyol, wherein the OH number of the dispersion is within a range of from 10 to 30 mg of KOH/g and wherein the polyether polyol has a hydroxyl functionality of 3, a proportion of primary hydroxyl groups in a range of from 70 to 90%, based on the total number of primary and secondary hydroxyl groups, a PO content in an amount from 70 to 90% by weight and an EO content in an amount of from 10 to 30% by weight;
(c) a polyether polyol having a hydroxyl functionality of 3, an OH number in a range of from 220 to 290 mg of KOH/g and a proportion of primary hydroxyl groups within a range of at least 90%, based on the total number of primary and secondary hydroxyl groups, which has a PO content in an amount of up to 2% by weight and an EO content in an amount of at least 75% by weight;
(d) a polyether polyol having a hydroxyl functionality of 2, an OH number within a range of from 50 to 70 mg of KOH/g and a proportion of primary hydroxyl groups in a range of from 0 to 3%, based on the total number of primary and secondary hydroxyl groups, which has a PO content in an amount of at least 95% by weight and an EO content in an amount up to 3% by weight.

2. Composition according to Claim 1, **characterized in that** the proportion of component (a) in the polyether polyol composition is in an amount of from 40 to 60% by weight.

3. Composition according to either Claim 1 or 2, **characterized in that** the proportion of component (b) in the polyether polyol composition is in an amount of from 10 to 30% by weight.

4. Composition according to any one of Claims 1 to 3, **characterized in that** the proportion of component (c) in the polyether polyol composition is in an amount of from 5 to 20% by weight.

5. Composition according to any one of Claims 1 to 4, **characterized in that** the proportion of component (d) in the polyether polyol composition is in an amount of from 10 to 30% by weight.

6. Composition according to any one of Claims 1 to 5, **characterized in that** the dispersed polymer in component (b) is a styrene-acrylonitrile polymer.

7. Composition according to Claim 6, **characterized in that** the proportion of acrylonitrile in the styrene-acrylonitrile polymer is in an amount of from 30 to 40% by weight.

8. Composition according to either Claim 6 or 7, **characterized in that** the proportion of polyether polyol in the dispersion is in an amount of from 50 to 65% by weight.

9. Composition according to any one of Claims 1 to 8, **characterized in that** the proportion of primary hydroxyl groups in component (a) is in an amount of from 50 to 70%, based on the total number of primary and secondary hydroxyl groups.

10. Composition according to any one of Claims 1 to 9, **characterized in that** the polyether polyol of component (a) is derived from propylene glycol as the starting molecule.

11. Composition according to any one of Claims 1 to 10, **characterized in that** the polyether polyol of component (b) is derived from glycerol as the starting molecule.

12. Composition according to any one of Claims 1 to 11, **characterized in that** the polyether polyol of component (c) is derived from trimethylolpropane as the starting molecule.

13. Composition according to any one of Claims 1 to 12, **characterized in that** the polyether polyol of component (d) is derived from propylene glycol as the starting molecule.

14. Process for preparing a visco-elastic foam, **characterized in that**
A) a polyisocyanate component,
B) a polyether polyol composition according to any one of Claims 1 to 13,
C) optionally water, one or more catalysts
are reacted optionally with the addition of further auxiliaries, fillers and/or blowing agents.

15. Process according to Claim 14, **characterized in that** the amount of polyisocyanate component is selected such that the isocyanate index is within a range of from 70 to 110 and preferably in a range of from 80 to 100.

16. Process according to either Claim 14 or 15, **characterized in that** a polyisocyanate component obtained by a prepolymerization is employed.

17. Process according to Claim 16, **characterized in that** a polyether polyol composition according to any one of Claims 1 to 13 is employed in the prepolymerization.

18. Process according to any one of Claims 14 to 17, **characterized in that** the polyisocyanate component employed is MDI having a monomer content in an amount of from 75 to 85% by weight.

19. Process according to Claim 18, **characterized in that** a polyisocyanate component employed has from 8 to 35% and preferably from 15 to 25% by weight of the monomer content attributable to MDI 2,4'-isomer.

20. Visco-elastic foam obtainable according to any one of Claims 14 to 19.

21. Shaped body comprising the visco-elastic foam according to Claim 20.

22. Slabstock of visco-elastic foam according to Claim 20.

23. Use of a shaped body according to Claim 21 in mattresses, pillows, seat covers, soles of shoes, earplugs, protective clothing, protective equipment or sound insulations.

24. Use of (cut) slabstock foam according to Claim 22 in mattresses, pillows, seat covers, soles of shoes, earplugs, protective clothing, protective equipment or sound insulations.

## Revendications

1. Composition de polyétherpolyol pour la production de mousses de polyuréthane, comprenant :
(a) un polyétherpolyol ayant une fonctionnalité hydroxy de 2, un indice de groupes OH dans une plage de 50 à 65 mg de KOH/g et une proportion de groupes hydroxy primaires dans une plage de 40 à 80 % par rapport au nombre total de groupes hydroxy primaires et secondaires, qui présente une teneur en PO en une quantité de 45 à 55 % en poids et une teneur en EO en une quantité de 40 à 55 % en poids ;
(b) une dispersion d'un polymère dans un polyétherpolyol, l'indice de groupes OH de la dispersion se trouvant dans une plage de 10 à 30 mg de KOH/g et le polyétherpolyol présentant une fonctionnalité de 3, une proportion de groupes hydroxy primaires dans une plage de 70 à 90 % par rapport au nombre total de groupes hydroxy primaires et secondaires, une teneur en PO en une quantité de 70 à 90 % en poids et une teneur en EO en une quantité de 10 à 30 % en poids ;
(c) un polyétherpolyol ayant une fonctionnalité hydroxy de 3, un indice de groupes OH dans une plage de 220 à 290 mg de KOH/g et une proportion de groupes hydroxy primaires dans une plage d'au moins 90 % par rapport au nombre total de groupes hydroxy primaires et secondaires, qui présente une teneur en PO en une quantité de jusqu'à 2 % en poids et une teneur en EO en une quantité d'au moins 75 % en poids ;
(d) un polyétherpolyol ayant une fonctionnalité hydroxy de 2, un indice de groupes OH dans une plage de 50 à 70 mg de KOH/g et une proportion de groupes hydroxy primaires dans une plage de 0 à 3 % par rapport au nombre total de groupes hydroxy primaires et secondaires, qui présente une teneur en PO en une quantité d'au moins 95 % en poids et une teneur en EO en une quantité de jusqu'à 3 % en poids.

2. Composition selon la revendication 1, **caractérisé en ce que** la proportion du composant (a) dans la composition de polyétherpolyol se situe en une quantité de 40 à 60 % en poids.

3. Composition selon la revendication 1 ou 2, **caractérisée en ce que** la proportion du composant (b) dans la composition de polyétherpolyol se situe en une quantité de 10 à 30 % en poids.

4. Composition selon l'une quelconque des revendications 1 à 3, **caractérisée en ce que** la proportion du composant (c) dans la composition de polyétherpolyol se situe en une quantité de 5 à 20 % en poids.

5. Composition selon l'une quelconque des revendications 1 à 4, **caractérisée en ce que** la proportion du composant (d) dans la composition de polyétherpolyol se situe en une quantité de 10 à 30 % en poids.

6. Composition selon l'une quelconque des revendications 1 à 5, **caractérisée en ce que** le polymère dispersé dans le composant (b) est un polymère styrène-acrylonitrile.

7. Composition selon la revendication 6, **caractérisé en ce que** la proportion d'acrylonitrile dans le polymère styrène-acrylonitrile se situe en une quantité de 30 à 40 % en poids.

8. Composition selon la revendication 6 ou 7, **caractérisé en ce que** la proportion du polyétherpolyol dans la dispersion se situe en une quantité de 50 à 65 % en poids.

9. Composition selon l'une quelconque des revendications 1 à 8, **caractérisée en ce que** la proportion des groupes hydroxy primaires dans le composant (a) se situe en une quantité de 50 à 70 % par rapport au nombre total de groupes hydroxy primaires et secondaires.

10. Composition selon l'une quelconque des revendications 1 à 9, **caractérisée en ce que** le polyesterpolyol du composant (a) dérive de propylèneglycol en tant que molécule de départ.

11. Composition selon l'une quelconque des revendications 1 à 10, **caractérisée en ce que** le polyesterpolyol du composant (b) dérive de glycérol en tant que molécule de départ.

12. Composition selon l'une quelconque des revendications 1 à 11, **caractérisée en ce que** le polyesterpolyol du composant (c) dérive de triméthylolpropane en tant que molécule de départ.

13. Composition selon l'une quelconque des revendications 1 à 12, **caractérisée en ce que** le polyesterpolyol du composant (d) dérive de propylèneglycol en tant que molécule de départ.

14. Procédé pour la production d'une mousse viscoélastique, **caractérisé en ce qu'**on met en réaction
A) un composant polyisocyanate
B) une composition de polyétherpolyol selon l'une quelconque des revendications 1 à 13,
C) éventuellement de l'eau, un ou plusieurs catalyseurs
avec addition éventuellement d'autres adjuvants, charges et/ou agents d'expansion.

15. Procédé selon la revendication 14, **caractérisé en ce qu'**on choisit la quantité du composant polyisocyanate de manière que l'indice isocyanate se situe dans une plage de 70 à 110, de préférence dans une plage de 80 à 100.

16. Procédé selon la revendication 14 ou 15, **caractérisé en ce qu'**on utilise un composant polyisocyanate obtenu par une polymérisation.

17. Procédé selon la revendication 16, **caractérisé en ce que** dans la polymérisation on utilise une composition de polyétherpolyol selon l'une quelconque des revendications 1 à 13.

18. Procédé selon l'une quelconque des revendications 14 à 17, **caractérisé en ce qu'**on utilise comme composant polyisocyanate du MDI ayant une teneur en monomères en une quantité de 75 à 85 % en poids.

19. Procédé selon la revendication 18, **caractérisé en ce qu'**on utilise un composant polyisocyanate dont la proportion d'isomère 2,4' de MDI dans la fraction de monomères se situe en une quantité de 8 à 35 % en poids, de préférence en une quantité de 15 à 25 % en poids.

20. Mousse viscoélastique pouvant être obtenue selon l'une quelconque des revendications 14 à 19.

21. Corps moulés, comprenant la mousse viscoélastique selon la revendication 20.

22. Bloc de mousse viscoélastique selon la revendication 20.

23. Utilisation d'un corps moulé selon la revendication 21 dans des matelas, des oreillers, des housses de sièges, des semelles de chaussures, des bouchons d'oreilles, des vêtements de protection, l'équipement de protection ou des isolations phoniques.

24. Utilisation d'un bloc (découpé) de mousse selon la revendication 22 dans des matelas, des oreillers, des housses de sièges, des semelles de chaussures, des bouchons d'oreilles, des vêtements de protection, l'équipement de protection ou des isolations phoniques.
